# EUROPÄISCHE PATENTSCHRIFT

(11) **EP 0 692 301 B1**
(45) Veröffentlichungstag und Bekanntmachung des Hinweises auf die Patenterteilung: **30.09.1998**
(21) Anmeldenummer: 95109496.0
(22) Anmeldetag: 20.06.1995
(51) Int. Cl.: B01D 53/94, B01J 23/64

(54) **Sorptionskatalysator zur sorptiven und oxidativen Reinigung der Abgase von Dieselmotoren**
Sorption catalyst for sorbing and oxidising cleaning of diesel engine exhaust gases
Catalyseur adsorbant pour la purification sorbante et oxydante de gaz d'échappement de moteur diesel

(30) Priorität: 09.07.1994 DE 4424235
(43) Veröffentlichungstag der Anmeldung: 17.01.1996
(73) Patentinhaber: MAN Nutzfahrzeuge Aktiengesellschaft, 80976 München (DE)
(72) Erfinder: Jacob, Eberhard, Dr. Dipl.-Chem., D-82327 Tutzing (DE); Harris, Michael, Dipl.-Chem., D-64839 Münster (DE)

(56) Entgegenhaltungen:
- EP-A- 0 362 960
- EP-A- 0 493 803
- EP-A- 0 566 878
- EP-A- 0 585 795

## Beschreibung

Die Erfindung betrifft einen Sorptionskatalysator zur kombinierten, sorptiven und oxidativen Reinigung der Abgase von Dieselmotoren.

Ein Katalysator dieser Art ist aus der EP-A-0 585 795 bekannt. Dieselabgas durchströmt hierbei einen Sorptions-Oxidations-Katalysator (kurz: SO-Kat). Es hat sich herausgestellt, daß mit einem derartigen Katalysator die Emission von leichtflüchtigen organischen Verbindungen (HVOC) und von an Partikel anlagernde mäßig- und schwerflüchtige organische Verbindungen (SOF) und von kohlenstoffreichen Feinstpartikeln vermindert werden kann.

Der SO-Kat besteht aus einem monolithischen Katalysatorkörper mit frei durchströmbaren Kanälen. Der Katalysatorkörper besteht entweder vollständig aus der SO-Kat-Aktivmasse oder wird durch Beschichtung eines inerten Katalysatorträgers mit der SO-Kat-Aktivmasse hergestellt. Die Aktivmasse des SO-Kats ist frei von Platinmetallen und besteht aus hochoberflächigen Feststoffsäuren im System V₂O₅/WO₃/TiO₂/SiO₂/Al₂O₃ mit partieller Sulfatisierung und/oder Phosphatierung des Trägerstoffes TiO₂ in der Anatasmodifikation. Die Rückhaltung der HVOC und SOF erfolgt bei SO-Kat-Temperaturen unter 170°C überwiegend durch Chemisorption und bei darüberliegenden Temperaturen durch Oxidation, wobei hohe Sorptions- und Oxidationsaktivität nahtlos ineinander übergreifen. Der SO-Kat ist in seiner Oxidationsaktivität gegenüber SO₂ und NO stark gehemmt.

Nachteilig bei dieser beschriebenen Lösung ist die fehlende CO-Oxidationsaktivität und die Bildung von CO und von Spuren von teilweise äußerst geruchsintensiven Carbonsäuren durch partielle Oxidation flüchtiger organischer Abgaskomponenten. Mindestens ein Viertel des C-Anteils der organischen Abgaskomponenten wird zu CO oxidiert.

Ein nach mehrstündigem Motorkaltlauf (ca. 100°C) mit flüchtigen organischen Verbindungen (VOC) gesättigter SO-Kat, wird bei Last- und Drehzahlaufschaltung einen Teil der sorbierten VOC unumgesetzt desorbieren, gleichzeitig bilden sich durch partielle Oxidation der sorbierten VOC geruchsintensive organische Sauerstoffverbindungen, z. B. eine Reihe von Alkylcarbonsäuren Cₙ H₂ₙ₊₁COOH (n = 0 bis 6).

Für die besonders leichtflüchtigen organischen Verbindungen ist die Sorptionsaktivität häufig zu gering, so daß z. B. niedermolekulare Olefine, wie Ethen und Propen, bei 100°C nur wenig zurückgehalten werden.

Bei der bekannten Vorrichtung ist dem SO-Kat ferner ein Platin-Oxidationskatalysator nachgeschaltet. Dieser besitzt den Nachteil, daß dessen Oxidationsaktivität bei Temperaturen unterhalb von ca. 200°C kaum noch vorhanden ist. Bei Temperaturen über 400°C wird eine erhebliche SO₂ ―Oxidation beobachtet.

Ein allgemeiner Nachteil der bekannten Lösung ist die relativ im Vergleich zu Oxidationskatalysatoren niedrige Raum- und Flächengeschwindigkeit, mit der die Auslegung erfolgt und die einen relativ großvolumigen SO-Kat zur Folge hat.

Wird der SO-Kat einem Reduktionskatalysator (SCR-Katalysator) zur NOₓ -Verminderung mit den Reduktionsmitteln Ammoniak oder Harnstoff nachgeschaltet, wird NH₃ bei Temperaturen unter 250 - 300°C durch Sorption gespeichert und bei Temperaturen über 450°C zu N₂ oxidiert. Für den wichtigen Arbeitstemperaturbereich zwischen 300 und 450°C wird jedoch keine NH₃-Sperrwirkung beobachtet.

Die EP-A 0 493 803 beschreibt einen Oxidationskatalysator auf Al₂O₃-Basis. Der genannte Oxidationskatalysator hat keine Sorptionsaktivität für HC, weil die wesentlichen Aktivkomponenten V₂O₅/WO₃/TiO₂, die stark sauer sind, fehlen.

Für Dieselmotorabgase sind Katalysatoren mit sauren Eigenschaften erforderlich. Der genannte Katalysator hat nur schwach saure Eigenschaften und wird durch Sulfatisierung irreversibel 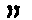 vergiftet" und verliert damit seine Wirkung

Es ist somit Aufgabe der vorliegenden Erfindung, einen Sorptions-Oxidations-Katalysator für die Reinigung von Dieselabgas anzugeben, der eine ausreichend hohe CO-Oxidationsaktivität besitzt, der partielle Oxidation unter Bildung von Geruchsstoffen vermeidet, dessen Sorptionsaktivität für HVOC und Sperraktivität bei Last- und Drehzahlaufschaltung nach Kaltlauf erhöht ist. Die Inhibierung der SO₂ ― und NO ―Oxidationsaktivität sollte beibehalten werden.

Die Aufgabe wird erfindungsgemäß mit den Merkmalen des Anspruches 1 gelöst.

Damit ist ein Sorptionskatalysator geschaffen, mit dem in einem Arbeitstemperaturbereich von Umgebungstemperatur (Kaltstart!) bis 650°C die Emission folgender Dieselabgaskomponenten weitgehend vermindert werden kann:
1. Leichtflüchtige organische Verbindungen (HVOC).
   A: Bei Raumtemperatur gasförmige Verbindungen (Kochpunkt < 25°C), z. B. Propan, Formaldehyd.
   B: Verbindungen mit einem Kochpunkt zwischen 25 und 200°C, die den Partikelmeßfiltern (52°C) vollständig passieren (z. B. Decan).
   C: Mäßig leichtflüchtige Verbindungen mit einem Kochpunkt zwischen 200 und 300°C, die teilweise auf dem Partikelmeßfilter (52°C) abgeschieden werden (z. B. Tridecan).
      HVOC werden durch ein bei 19O°C messendes FID-Gerät vollständig erfaßt. Sorption und Oxidation wird von Klasse A nach C erleichtert.
2. An Partikel anlagernde, mäßig- und schwerflüchtige organische Verbindungen (SOF = lösliche organische Fraktion der Dieselpartikel). Die SOF werden durch ein bei 190°C messendes FID-Gerät teilweise erfaßt.
3. Geruchs- und Reizstoffe gehören den Verbindungsklassen 1. und 2. an.
4. Ammoniak, NH₃. Mit NH₃-Emission (Schlupf!) ist bei Dieselmotoren beim Einsatz der Harnstoff- oder NH₃―SCR-Technik zur NOₓ―Verminderung zu rechnen.
5. Kohlenmonoxid, CO.

Weiterhin wird die Emission von kohlenstoffreichen Feinstpartikeln meßbar vermindert, während die unerwünschte Oxidation von SO₂ und NO gehemmt wird.

Ein weiterer Vorteil ist, daß durch die allgemeine Erhöhung der Sorptions-Oxidationsaktivität eine Verkleinerung der Baugröße des SO-Kats erreicht wird. Ferner läßt sich im Zusammenhang mit einer katalytischen NOₓ―Verminderung im Dieselabgas eine NH₃ ―Sperraktivität im Arbeitstemperaturbereich zwischen 300 und 450°C generieren.

Zur Erläuterung der Erfindung sei zunächst auf Tabelle 1 verwiesen. SO-Kat-Beispiel 1 repräsentiert den Stand der Technik.

Die Beispiele 2 bis 5 sind durch Imprägnierung des SO-Kat-Beispieles 1 mit Palladium und/oder Platin hergestellt. Beispiel 6 steht für die erfindungsgemäßen Merkmale der Ansprüche 5 - 7. Die Beispiele 7 und 9 ergeben sich aus einer vollständigen bzw. teilweisen Substitution von Wolframtrioxid durch Molybdäntrioxid. Die Beispiele 8 und 10 repräsentieren Pt-, Pd- und Mo-haltige SO-Kats. Das Beispiel 11 repräsentiert einen Beschichtungs-Katalysator nach Anspruch 3. Aus Vergleichsgründen ist auch ein serienmäßiger Dieseloxidations-Katalysator auf Platinbasis aufgeführt (Vergleichsbeispiel 1).

Tabelle 2 zeigt die Ergebnisse von Untersuchungen zur Sorptions- und Oxidationsaktivität der Beispiele 1 - 11 und des Vergleichsbeispieles 1 mit Decan, C₁₀H₂₂, als Modellsubstanz für die HVOC (Klasse B + C).

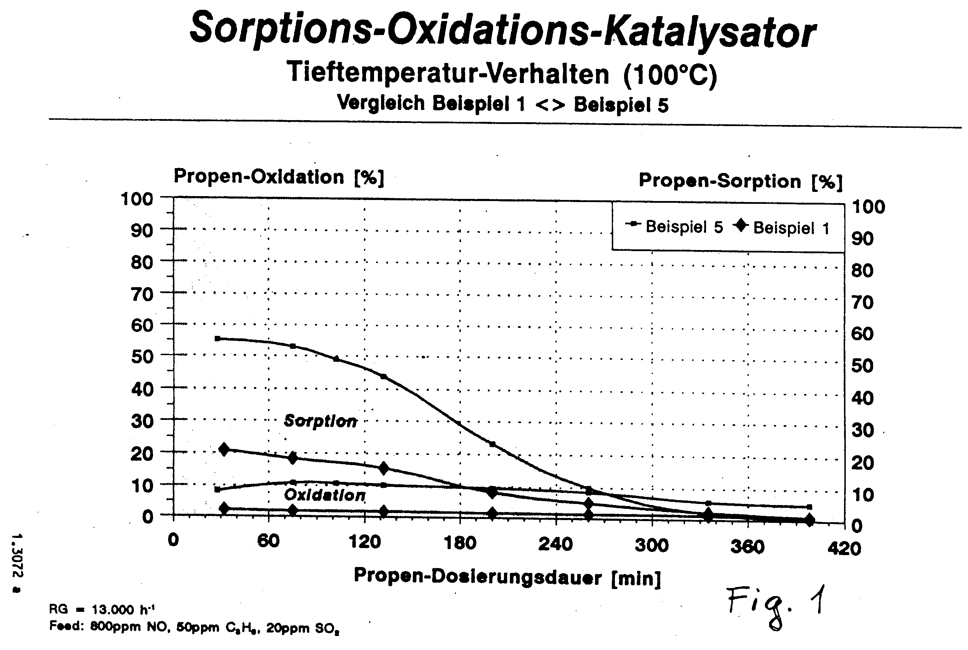

In Fig. 1 ist am Beispiel von Sorption und Oxidation von Propen, C₃H₆, bei 100°C der durch die Erfindung erzielte technische Fortschritt gezeigt. Propen wurde als Modellsubstanz für die Klasse A der HVOC ausgewählt. Das erfindungsgemäße Beispiel 5 zeigt bei 100°C eine Sorptionsaktivität von 55%, gegenüber 20% des Beispieles 1, das den Stand der Technik verkörpert. Die anfängliche Oxidationsaktivität beträgt 9% bei Beispiel 5, gegenüber 2% bei Beispiel 1. Auch nach 2 h Dosierdauer wird noch 47% des C₃H₆ von Beispiel 5 sorbiert.

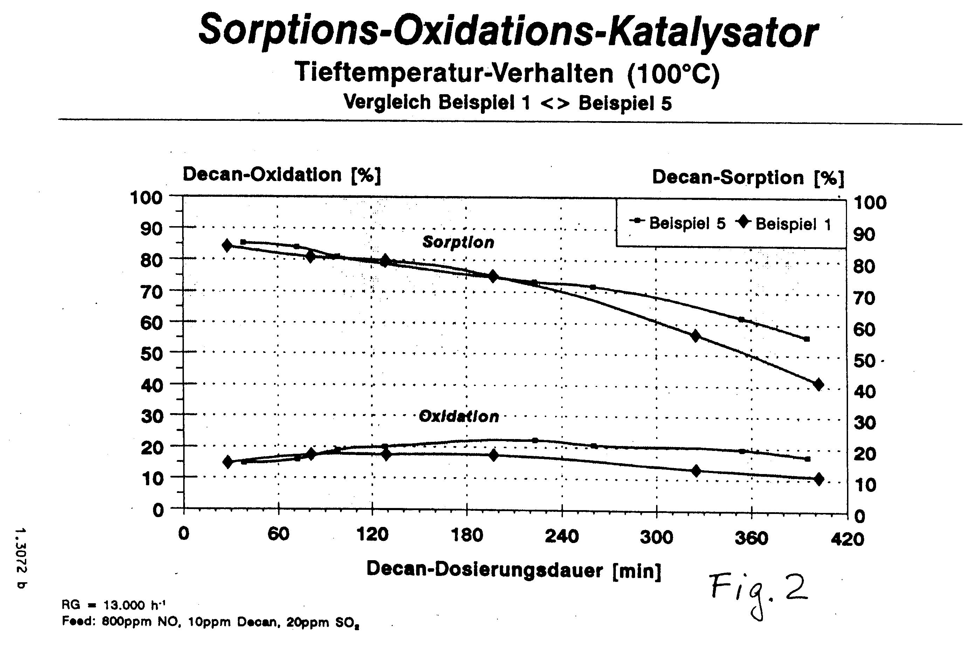

In Fig. 2 ist am Beispiel von Sorption und Oxidation von Decan, C₁₀H₂₂, bei 100°C in Abhängigkeit vom SO-Katalysator und Decan-Dosierdauer gezeigt. Sowohl bei Beispiel 1, als auch bei Beispiel 5, erfolgt eine vollständige Durchtrittssperre für Decan. Nach 0,5 h Decan-Dosierung beträgt der Sorptionsanteil jeweils ca. 85% und der Oxidationsanteil ca. 15%. Unterschiede werden erst nach einigen Stunden C₁₀H₂₂ ―Dosierdauer erkennbar. Das erfindungsgemäße Beispiel 5 behält seine Oxidationsaktivität bei, die Sorptionsaktivität geht deutlich weniger mit der Dosierdauer zurück, als beim Beispiel 1.

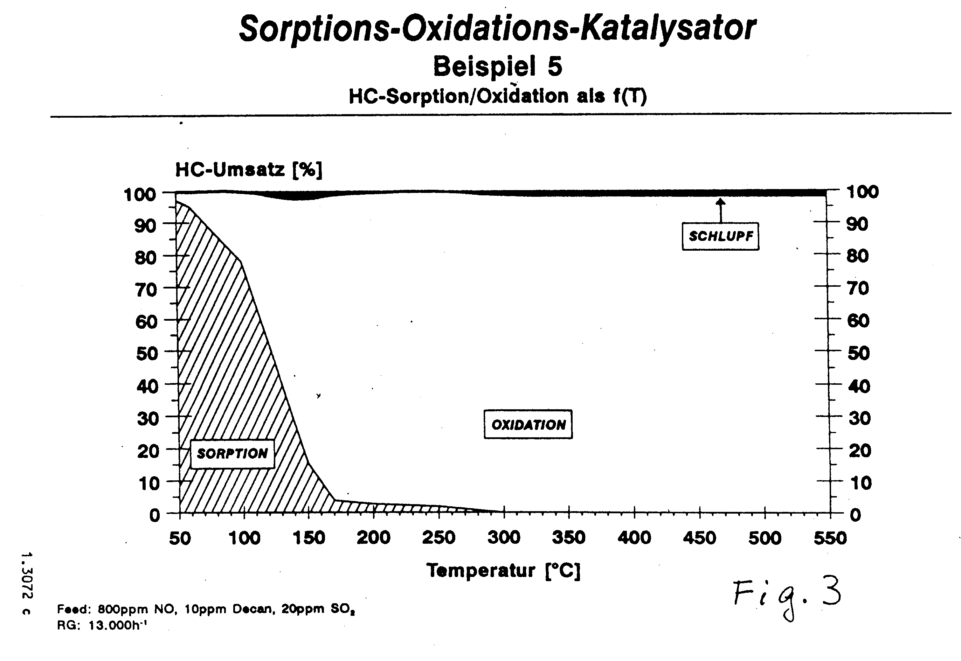

In Fig. 3 wird die Temperaturabhängigkeit des C₁₀H₂₂―Umsatzes bei Beispiel 5 bei Beaufschlagung mit 10 ppm C₁₀H₂₂ (RG = 13.000 h⁻¹) dargestellt. Bemerkenswert ist die fast vollkommene Sperraktivität bei Temperaturen zwischen 50 und 550°C. Bereits bei 50°C erfolgt meßbare Oxidation, die sich mit steigender Temperatur erhöht. Bei 50°C erfolgt die Rückhaltung des Decans zu 97% durch Chemisorption unter Bildung einer chemischen Oberflächenverbindung.

Die Sorptions-Oxidations-Aktivität für Decan bei 100°C ist in Tabelle 2 für die SO-Kat-Beispiele 1 bis 11 und das Vergleichsbeispiel 1 aufgelistet. Nach 3 h Beaufschlagung mit 20 ppm Decan wird ein Decanschlupf gemessen, der bei den platinmetallfreien SO-Kats bei 36 bis 37% liegt. Die Dotierung mit Platinmetallen kann den Schlupf bis auf 12% absenken. Entsprechend ist die Oxidation des Decans bei den platinmetalldotierten SO-Kats ausgeprägter, als bei den platinmetallfreien SO-Kat-Beispielen 1, 7, 9. Der Vergleichskatalysator (Vergleichsbeispiel 1) besitzt weder Sorptions- noch Oxidationsaktivität.

In Tabelle 3 ist die maximal auftretende CO-Konzentration zusammengestellt, die beim Aufheizen (100 bis 250°C in 20 Minuten) von SO-Kat-Beispielen, die vorher bei einer Raumgeschwindigkeit von 13.000 h⁻¹ mit 20 ppm Decan beaufschlagt wurden, als Oxidationsprodukt freigesetzt wird. Wiederum fallen die platinmetallfreien SO-Kats durch hohe CO-Emission aus dem Rahmen. Die platinmetalldotierten SO-Kats zeigen dagegen nur geringe CO-Bildung.

Ein weiterer signifikanter Unterschied zwischen platinmetallfreien und platinmetallhaltigen SO-Kats betrifft die Bildung von Geruchsträgern. Während das bei der Desorption unter Bedingungen von Tabelle 3 entstehende Abgas bei platinmetallhaltigen SO-Kats (Beispiele 2 bis 6, 8, 10, 11) nahezu geruchlos ist, tritt bei den SO-Kats (Beispiele 1, 7, 9) ein penetranter Geruch auf, der der Bildung von Alkylcarbonsäuren, z. B. von Buttersäure zuzuschreiben ist. Die Geruchsintensität ist bei dem MoO₃―haltigen SO-Kats (Beispiel 7, 9) geringer als bei dem WO₃―haltigen SO-Kats nach Beispiel 1.

Die Sperraktivität (in %) für CH₂O (20 ppm) und CH₃COOH (20 ppm) wurde bei 200°C und einer Raumgeschwindigkeit von 13.000 h⁻¹ bei den SO-Kat-Beispielen 1,5 und 9 vermessen. Es wurden folgende Ergebnisse erzielt:

| Beispiel | CH₂O | CH₃COOH |
|---|---|---|
| 1 | 32 | 21 |
| 5 | 89 | 71 |
| 9 | 92 | 76 |

Auch an diesen Beispielen wird der Vorteil der erfindungsgemäßen Lösungen demonstriert.

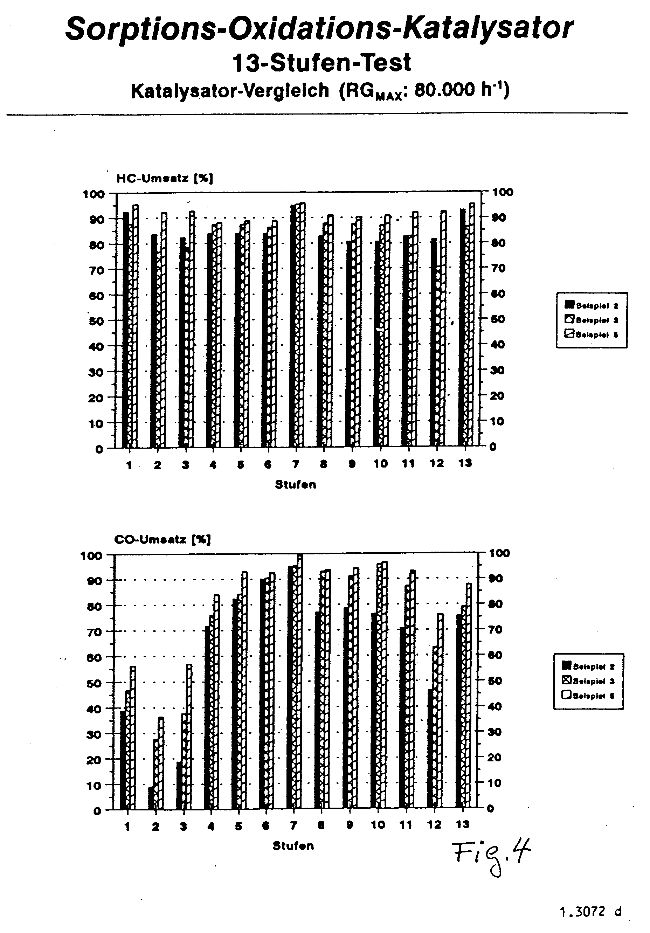

Die HC- und CO-Konversionsraten der erfindungsgemäßen SO-Kats nach Beispiel 2, 3 und 5 bei Motorprüfstandstests ist in Fig. 4 dargestellt. Es wurde ein Testzyklus nach 88/77 EWG (13-Stufentest) realisiert. Die HC-Umsätze liegen bei allen Teststufen über 80%. Der Pt-Pd-SO-Kat nach Beispiel 5 zeigt etwas höhere Umsätze als der Pd-SO-Kat nach Beispiel 2 und der Pt-SO-Kat nach Beispiel 3. Die HC-Umsätze bei Beispiel 1 erreichen durchschnittlich 78%. Die CO-Umsätze liegen wiederum beim Pt-Pd-SO-Kat nach Beispiel 5 am höchsten. Ein platinmetallfreier SO-Kat nach Beispiel 1 zeigt keinen CO-Umsatz. Die CO-Emission des Motors wird durch die CO-Bildung am SO-Kat (Beispiel 1) um etwa 30% erhöht. Weiterhin wird die Bildung von Geruchsstoffen, vor allem von Buttersäure, C₃H₇COOH, nachgewiesen. Der Zusatz von Platinmetallen verhindert die Bildung derartiger teiloxidierter, intensiv riechender Spurenkomponenten.

Partikelmessungen im 13-Stufentest (siehe Tabelle 4) ergaben bei den SO-Kat-Beispielen 2, 3, 5 und 6 eine Reduktion der Gesamtpartikelmasse. Eine Analyse der Partikel vor und nach SO-Kat ergab die in Tabelle 4 zusammengestellten Werte. Die SOF-Konvertierungsraten liegen bei sämtlichen SO-Kats recht hoch; große Unterschiede zeigen sich in der SO₂―Oxidationsaktivität, die zu einer Sulfatisierung der Partikel führt. Beim SO-Kat-Beispiel 4 führt die zu hohe Pt-Beladung zu entsprechend hoher Sulfatbildung. Beim serienmäßigen Oxidationskatalysator ist die Sulfatbildung noch ausgeprägter als beim Beispiel 4.

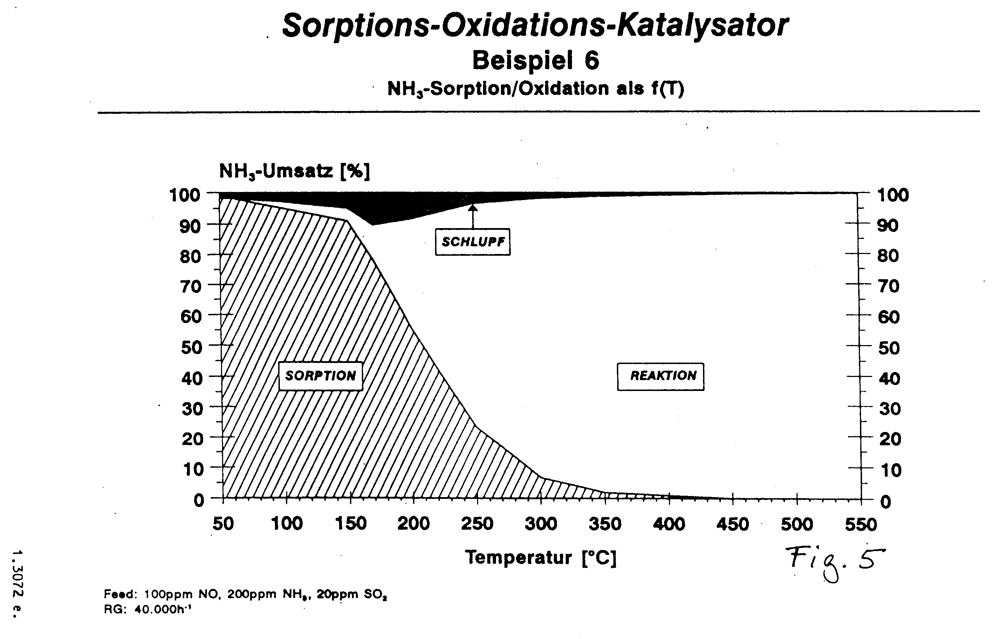

Das hervorragende Ergebnis des Beispieles 6 wiederspiegelt eine weitere Ausgestaltung der Erfindung, in der der nach den Ansprüchen 1 bis 4 hergestellte Wabenkörper mit weiterer Aktivmasse beschichtet wird. Es zeigt sich einerseits, daß eine Erhöhung von Sorptions- und Oxidationsaktivität des Wabenkörpers durch Erhöhung des Porenvolumens zur Reduzierung diffusionskontrollierter Transportvorgänge erreicht wird. Da aber oberhalb von ca. 35% Porenvolumen die mechanische Stabilität des Wabenkörpers drastisch absinkt, wird der Wabenkörper mit einer Dickschicht, die ein Porenvolumen von 40 bis 70% aufweisen kann, versehen. Aus Tabelle 2 ist ersichtlich, daß durch diese Maßnahme die Sorptionsaktivität gegenüber Decan deutlich angehoben wird. Im Beispiel 6 enthält die Beschichtungsmasse gemäß Anspruch 8 kein Platin. Als Resultat dieser Maßnahme ist die signifikante Inhibierung der Sulfatbildung zu werten. Ein weiteres Anwendungsgebiet für den sulfatinhibierenden SO-Kat mit erhöhtem Platingehalt (Beispiel 6) ist die Anwendung als Sorptions- und Oxidationskatalysator zur Sperrung des NH₃―Schlupfs bei der Verwendung von Reduktionskatalysatoren unter Einsatz von Ammoniak oder Harnstoff als Reduktionsmittel zur Verminderung von Stickoxiden im Dieselabgas. Hierbei wird der SO-Kat dem Reduktionskatalysator nachgeschaltet. Ein Ergebnis einer Synthesegasmessung ist in Fig. 5 grafisch dargestellt: Bei einer Raumgeschwindigkeit von 40.000 h⁻¹ erfolgt eine fast vollkommene Sperrung des NH₃―Durchgangs bei Temperaturen zwischen 50 und 550°C.

Aldehydmessungen mit der DNPH-Methode beim Kaltlauf des Motors bei einer SO-Kat-Temperatur von 100°C ergaben beim Beispiel 5 einen vollständigen Abbau höherer Aldehyde. Es konnten lediglich Spuren von Form- und Acetaldehyd nach dem SO-Kat nachgewiesen werden.

### Beispiel 1:

Wabenkörper (Wandstärke 0,4 mm; 31 Zellen/cm², 1700 m²/m³ geometrische Oberfläche) werden durch Extrudieren, Trocknen und Kalzinieren ( 4 h bei 600°C) einer gemäß DE-A-24 58 888 hergestellten Mischung am sulfathaltigen WO₃/TiO₂ (Anatas) und V₂O₅ Verarbeitungshilfmitteln und strukturellen Promotoren derart hergestellt, daß der fertige Wabenkörper 3% V₂O₅, 9% WO₃, 0,8% SO₄²⁻ (als Titansulfat), 77% TiO₂ (Anatas), Rest: Strukturelle Promotoren enthält. Die BET-Oberfläche beträgt 50 m²/g und das Makroporenvolumen 35% bei einem Litergewicht von 725 g.

### Beispiel 2:

Ein Wabenkörper am Beispiel 1 wird mit einer Lösung von Palladium (II)-Nitrat in Wasser getränkt. Das Volumen der Lösung war identisch mit dem Porenvolumen des Wabenkörpers. Die Palladium-Konzentration der Lösung wurde so gewählt, daß der nach dem Trocknen bei 110°C 2 h bei 550°C kalzinierte Wabenkörper 0,35 g/dm³ Pd enthält. Das Palladium liegt als WO₃/V₂O₅―getragenes Palladiumoxid, PdO, vor.

### Beispiel 3:

Ein Wabenkörper aus Beispiel 1 wird mit einer Lösung von Tetramminplatin (II) hydrogencarbonat, [Pt(NH₃)₄] (HCO₃)₂, in Wasser getränkt. Das Volumen der Lösung war identisch mit dem Porenvolumen des Wabenkörpers. Die Pt-Konzentration der Lösung wurde so gewählt, daß der nach dem Trocknen bei 110°C 2 h bei 550°C kalzinierte Wabenkörper 0,071 g/dm³ Pt enthielt. Das Platin liegt als WO₃/V₂O₅ ―getragenes Platinoxid, PtOₓ, vor.

### Beispiel 4:

Herstellung analog Beispiel 3. Es werden jedoch 0,35 g/dm³ Pt imprägniert.

### Beispiel 5:

Herstellung analog Beispiel 2 und 3. Es werden jedoch gleichzeitig 0,35 g/dm³ Pd und 0,071 g/dm³ Pt imprägniert.

### Beispiel 6:

Ein nach Beispiel 4 hergestellter Wabenkörper wird mit einer Dispersion eines zerkleinerten und feingemahlenen Wabenkörpers, hergestellt nach Beispiel 1, beschichtet. Die Beschichtungsdispersion besteht aus 25% naßgemahlenem Mahlgut mit Kornfraktionen < 50 µm und 0,5% Methylzellulose in Wasser. Durch mehrmaliges Tauchen und Trocknen bei 110°C und anschließendem Kalzimieren bei 550°C (2 h) wird eine Beschichtung mit einem Litergewicht von 200 g erreicht. Das Makroporenvolumen der Beschichtung beträgt 62%.

### Beispiel 7:

Die Wabenkörper für Beispiel 7 werden analog Beispiel 1 hergestellt. Das Ausgangsmaterial WO₃/TiO₂ (10 Gew.% WO₃) wurde durch MoO₃/TiO₂ (6,5 Gew.% MoO₃) ersetzt. Der kalzinierte Wabenkörper enthält 3% V₂O₅, 6% MoO₃, 0,8% SO₄²⁻als Titanylsulfat), 81% TiO₂ (Anatas), Rest: Strukturelle Promotoren. Die BET-Oberfläche beträgt 55 m²/g und das Makroporenvolumen 36%. Das Litergewicht ist 690 g.

### Beispiel 8:

Ein nach Beispiel 7 hergestellter Wabenkörper wird analog Beispiel 5 mit 0,35 g/dm³ Pd und 0,071 g/dm³ Pt beschichtet.

### Beispiel 9:

Die Wabenkörper für Beispiel 9 werden analog Beispiel 1 hergestellt. Das Ausgangsmaterial WO₃/TiO₂ (10 Gew.% WO₃) wird teilweise durch das Oxidgemisch MoO₃/TiO₂ (6,5 Gew.% MoO₃) ersetzt. Der kalzinierte Wabenkörper enthält 3% V₂O₅, 4,5% WO₃, 3% MoO₃, 0,8% SO₄²⁻ (als Titanylsulfat), 79% TiO₂ (Anatas), Rest: Strukturelle Promotoren. Die BET-Oberfläche beträgt 50 m²/g und das Makroporenvolumen 35%. Das Litergewicht ist 710 g.

### Beispiel 10:

Ein nach Beispiel 9 hergestellter Wabenkörper wird analog Beispiel 5 mit 0,35 g/dm³ Pd und 0,071 g/dm³ Pt beschichtet.

### Beispiel 11:

Ein Cordierit-Träger der Firma Corning Glass mit 31 Zellen/cm², Wandstärke 0,2 mm wird in Analogie zu Beispiel 6 mit einer Dispersion aus naßgemahlenem Wabenkörper aus Beispiel 5 beschichtet. Es wird auch hier nur die Kornfraktion < 50 µm eingesetzt. Nach dem Kalzinieren wird ein Gewichtszuwachs von 500 g/dm³ festgestellt. Das Makroporenvolumen der Beschichtung beträgt 55%.

### Vergleichsbeispiel 1:

Serienmäßiger Diesel-Oxidationskatalysator mit einem Platingehalt von 1,8 g/dm³ und 31 Zellen/cm².

### Beispiel 12: Aktivitätsmessung mit Synthesegas.

Aus den SO-Katalysator-Wabenkörper gemäß Beispiel 1 bis 9 und dem serienmäßigem Oxidationskatalysator gemäß Vergleichsbeispiel 1 wurden zylinderförmige Probekörper ⌀ 24 x 52 mm ausgebohrt. Die Probekörper werden an einem Aktivitätsmeßplatz mit Synthesegas bezüglich ihrer Sorptions- und Oxidationaktivität in Abhängigkeit von der Temperatur vermessen. Die Zusammensetzung des Synthesegases: 750 ppm NO, 50 ppm NO₂; 20 ppm SO₂, 1% H₂O, 5% O₂, Rest N₂.

Folgende Modelldsubstanzen für die HVOC wurden eingesetzt:
- Klasse A:: Propen, C₃H₆ (20 ppm)
- Formaldehyd,: CH₂O (20 ppm)
- Klasse B:: Decan, C₁₀H₂₂ (10 ppm)
Essigsäure, CH₃COOH (20 ppm).

In Vorversuchen wurde gezeigt, daß Decan deutlich schwieriger sorbier- und oxidierbar ist, als die HVOC der Klasse C und als die SOF-Anteile. Essigsäure ist schwieriger sorbier- und oxidierbar als die höheren Alkylcarbonsäuren, z. B. Buttersäure, die Geruchsträger mit äußerst niedrigen Geruchsschwellenwerten darstellen.

### Beispiel 13: Aktivitätsmessung am Motorprüfstand.

SO-Katalysator-Wabenkörper nach Beispiel 2 - 6 mit den Abmessungen ⌀ 280 x 250 mm und der Oxidationskatalysator (Vergleichsbeispiel 1) werden an einem Motorprüfstand getestet. Der Prüfstand ist ausgerüstet mit einem 6-Zylinder DI-Turbodieselmotor (163 kW, 6,6 l Hubraum) und einer Wirbelstrombremse. Der Versuchskraftstoff enthielt 0,03% Schwefel. Es wurden im Rahmen des 13-Stufentests nach 88/77/EWG HC-, CO-, und Partikel-Massenströme bestimmt.

Zur HC-Bestimmung dienten FID-Meßgeräte der Firma Testa. Die Messungen wurden bei 190°C ausgeführt. CO wurde mit einem NDIR-Meßgerät der Firma Horiba bestimmt. Die Partikelmasse wurde mit einem NOVA-Mini-Verdünnungstunnel im verdünnten Abgas bei 52°C gravimetrisch gemessen. Aldehydbestimmungen erfolgen nach der DNPH-Methode. Der Anteil der SOF (lösliche organische Fraktion) an der Partikelmasse wurde nach Extraktion mit CH₂Cl₂ gravimetrisch ermittelt. Der Sulfatanteil der Partikel wurde nach Extraktion mit Isopropanol/H₂O ionenchromatografisch bestimmt.

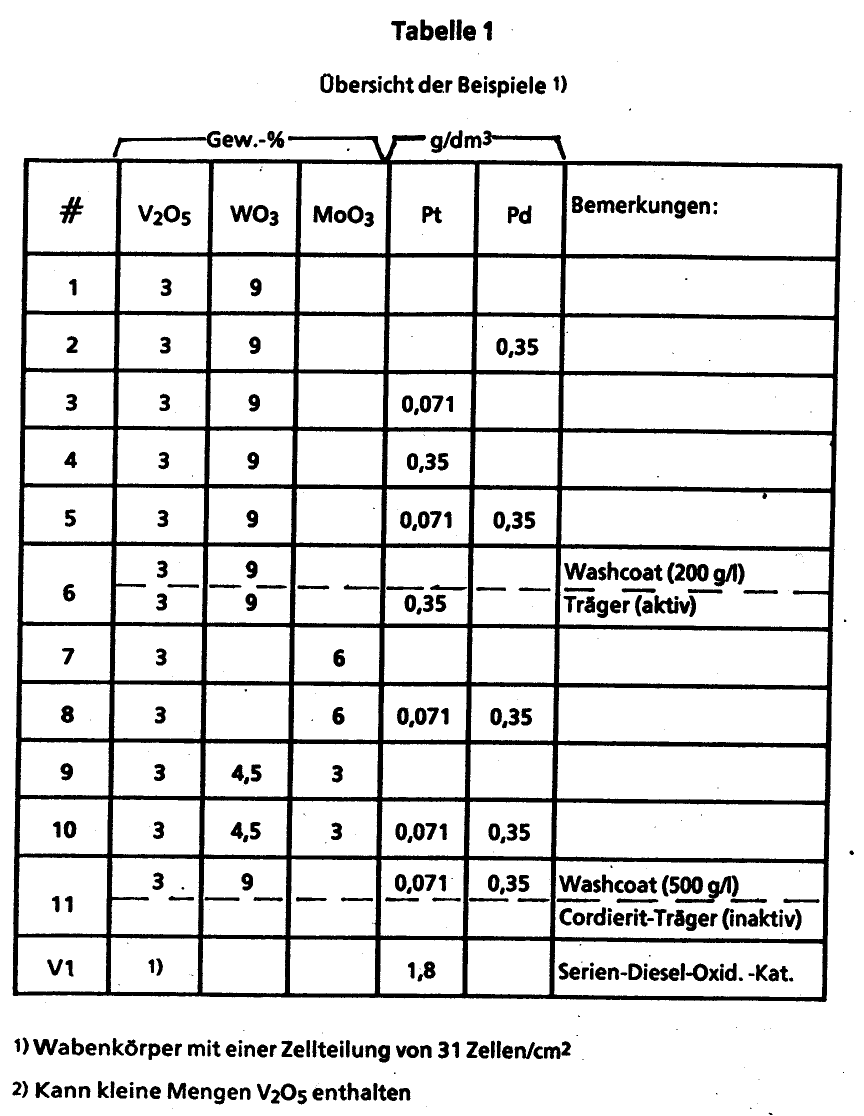

**Tabelle 2**

| Decan-Sorptions/Oxidationsaktivität (in %) bei 100°C der SO-Kats Beispiele 1 - 11 und des Vergleichsbeispieles nach 3 h Beaufschlagung mit 20 ppm C₁₀H₂₂-RG 13.000 h⁻¹ | | | |
|---|---|---|---|
| Beispiel | Sorption | Oxidation | Schlupf |
| 1 | 56 | 8 | 36 |
| 2 | 65 | 11 | 24 |
| 3 | 67 | 13 | 20 |
| 4 | 66 | 22 | 12 |
| 5 | 70 | 13 | 17 |
| 6 | 73 | 15 | 12 |
| 7 | 54 | 9 | 37 |
| 8 | 69 | 13 | 18 |
| 9 | 53 | 10 | 37 |
| 10 | 73 | 12 | 15 |
| 11 | 66 | 18 | 16 |
| V1 | 0 | 0 | 100 |

**Tabelle 3**

| Maximal gebildete CO-Konzentration beim Heizen (100°→250°C in 20 Minuten), von Decan-beaufschlagten (20 ppm, 3 h, 100°C) SO-Kats (Beispiele 1 - 11) RG = 25.000 h⁻¹ | |
|---|---|
| Beispiel | CO (ppm) |
| 1 | 250 |
| 2 | 35 |
| 3 | 25 |
| 4 | 19 |
| 5 | 20 |
| 6 | 21 |
| 7 | 260 |
| 8 | 23 |
| 9 | 245 |
| 10 | 20 |
| 11 | 18 |

**Tabelle 4**

| Ergebnisse der Partikelmessungen (g/kWh) im 13-Stufentest bei Einsatz verschiedener SO-Kats und eines serienmäßigen Oxidationskatalysators | | | | |
|---|---|---|---|---|
| | Gesamt-Partikelmasse | SOF | unlöslicher Rückstand | Sulfat + Wasser |
| ohne Kat | 0,35 | 0,15 | 0,18 | 0,02 |
| Beispiel 2 | 0,31 | 0,02 | 0,17 | 0,12 |
| Beispiel 3 | 0,34 | 0,03 | 0,17 | 0,14 |
| Beispiel 4 | 0,52 | > 0,01 | 0,17 | 0,35 |
| Beispiel 5 | 0,32 | > 0,01 | 0,17 | 0,15 |
| Beispiel 6 | 0,21 | > 0,01 | 0,16 | 0,05 |
| Vergleichs-Beispiel V1 | 0,86 | 0,08 | 0,18 | 0,6 |

## Patentansprüche

1. Sorptionskatalysator zur kombinierten sorptiven und oxidativen Reinigung der Abgase von Dieselmotoren mit Sperraktivität für leichtflüchtige organische Abgaskomponenten, für an Partikel anlagernde mäßig- und schwerflüchtige organische Abgaskomponenten und gegebenenfalls für Ammoniak mit Oxidationsaktivität gegenüber CO bei gehemmter Oxidationsaktivität für SO₂ und NO, wobei die Aktivmasse eine BET-Oberfläche von 30 bis 250 m²/g hat und aus Feststoffsäuren im System V₂O₅/WO₃/TiO₂ zusammengesetzt ist und gegebenenfalls SiO₂, Al₂O₃, SO₄²⁻, PO₄³⁻, enthält und gegebenfalls der Anteil des Wolframtrioxides WO₃ in der Aktivmasse vollständig oder teilweise durch Molybdäntrioxid MoO₃ ersetzt ist und die Aktivmasse mit Platinmetallen in Form ihrer Oxide, insbesondere Platin und Palladium, zur Erhöhung der Sperraktivität dotiert ist.

2. Sorptionskatalysator nach Anspruch 1, dadurch gekennzeichnet, daß die Aktivmasse aus den Feststoffsäuren in Form einer Wabenkörperstruktur ein Gewicht von 300 bis 1400 g, vorzugsweise von 400 bis 800 g, pro Liter Wabenkörper hat.

3. Sorptionskatalysator nach Anspruch 1 und 2, dadurch gekennzeichnet, daß die Aktivmasse aus den Feststoffsäuren in Form einer Beschichtung auf einer Trägerstruktur eine Beladung von 200 bis 800 g pro Liter Wabenkörper hat.

4. Sorptionskatalysator nach den Ansprüchen 1 bis 3, dadurch gekennzeichnet, daß der Gewichtsanteil der Platinmetalle in der Aktivmasse 0,001 bis 0,1% beträgt.

5. Sorptionskatalysator nach den Ansprüchen 1 bis 4, dadurch gekennzeichnet, daß der Katalysatorkörper zusätzlich mit einer Aktivmasse beschichtet ist, deren Porenstruktur und chemische Zusammensetzung von der des Grundkörpers abweicht.

6. Sorptionskatalysator nach Anspruch 5, dadurch gekennzeichnet, daß das Porenvolumen der Beschichtungs-Aktivmasse mehr als 35% erreicht.

7. Sorptionskatalysator nach den Ansprüchen 5 und 6, dadurch gekennzeichnet, daß die Aktivmasse für die Beschichtung kein Platin enthält.

## Claims

1. A sorption catalyst for combined sorbing and oxidising cleaning of diesel engine exhaust gases, with a sealing activity for highly volatile organic exhaust gas constituents, for moderately volatile and non-volatile organic exhaust gas constituents adsorbed on particles and if necessary, for ammonia with oxidation activity against CO with an inhibited oxidation activity for SO₂ and NO, where the active mass has a BET surface of 30 to 250 m²/g and is made up of solid acids in the system V₂O₅/WO₃/TiO₂ and optionally contains SiO₂, Al₂O₃, SO₄²⁻, PO₄³⁻, and where applicable, the proportion of the tungsten trioxide WO₃ in the active mass is completely or partially replaced with molybdenum trioxide MoO₃, and the active mass is doped with platinum metals in their oxide form, in particular platinum and palladium, to increase the sealing activity.

2. A sorption catalyst according to claim 1, characterised in that the active mass made up of the solid acids is in the form of a honeycomb structure having a weight of 300 to 1400 g, preferably 400 to 800 g per litre of honeycomb.

3. A sorption catalyst according to claim 1 or 2, characterised in that the active mass made up of the solid acids is in the form of a coating on a carrier structure having a loading of 200 to 800g per litre of honeycomb.

4. A sorption catalyst according to claims 1 to 3, characterised in that the percentage by weight of the platinum metals in the active mass is 0.001 to 0.1%.

5. A sorption catalyst according to claims 1 to 4, characterised in that the catalyst body is additionally coated with an active mass whose pore structure and chemical composition deviates from that of the basic body.

6. A sorption catalyst according to claim 5, characterised in that the pore volume of the coating-active mass attains more than 35%.

7. A sorption catalyst according to claims 5 and 6, characterised in that the active mass for the coating does not contain any platinum.

## Revendications

1. Catalyseur de sorption pour l'épuration sorbante et oxydante combinée des gaz d'échappement de moteurs diesel avec activité barrière pour des composants de gaz d'échappement organiques volatils, des composants organiques de gaz d'échappement moyennement et peu volatils déposés sur des particules et le cas échéant pour l'ammoniac avec une activité d'oxydation vis-a-vis de CO, en ayant une activité d'oxydation inhibée pour SO₂ et NO, où la masse active a une surface spécifique BET de 30 à 250 m²/g et est composée d'acides de matières solides du système V₂O₅/WO₃/TiO₂ et contient le cas échéant SiO₂, Al₂O₃, SO₄²⁻, PO₄³⁻, et le cas échéant on remplace la teneur en trioxyde de tungstène WO₃ dans la masse active totalement ou en partie par du trioxyde de molybdène MoO₃, et la masse active est dopée avec des métaux du groupe du platine sous forme de leurs oxydes, notamment le platine et le palladium, pour augmenter l'activité barrière.

2. Catalyseur de sorption selon la revendication 1,
caractérisé en ce que
la masse active des acides solides est sous la forme d'une structure en corps de nids d'abeilles ayant un poids de 300 à 1400 g, de préférence de 400 à 800 g par litre de corps en nids d'abeilles.

3. Catalyseur de sorption selon les revendications 1 et 2,
caractérisé en ce que
la masse active des acides solides est sous la forme d'un revêtement sur une structure porteuse et a une charge de 200 à 800 g par litre de corps en nids d'abeilles.

4. Catalyseur de sorption selon les revendications 1 à 3,
caractérisé en ce que
la teneur pondérale des métaux du groupe du platine dans la masse active est de 0,001 à 0,1 %.

5. Catalyseur de sorption selon les revendications 1 à 4,
caractérisé en ce que
le corps de catalyseur est revêtu en plus d'une masse active, dont la structure poreuse et la composition chimique sont différentes de celles du corps de base.

6. Catalyseur de sorption selon la revendication 5,
caractérisé en ce que
le volume de pores de la masse active d'enduction dépasse 35 %.

7. Catalyseur de sorption selon les revendications 5 et 6,
caractérisé en ce que la masse active d'enduction ne contient pas de platine.
